# EUROPEAN PATENT APPLICATION

(11) **EP 4 166 768 A1**
(43) Date of publication of application: **19.04.2023**
(21) Application number: 22199364.5
(22) Date of filing: 03.10.2022
(51) Int. Cl.: F02B 29/04, F02M 21/02, F02M 21/06

(54) **COOLING SYSTEM OF CHARGE AIR FOR RECIPROCATING INTERNAL COMBUSTION ENGINE AND CORRESPONDING ENGINE**

(30) Priority: 15.10.2021 CN 202111202488
(71) Applicant: Caterpillar Motoren GmbH & Co. KG, 24159 Kiel (DE)
(72) Inventor: HUANG, Chenchun, Wuxi, 214028 (CN); OUYANG, Lin, Wuxi, 214028 (CN); ZHU, Zhiguo, Wuxi, 214028 (CN); ZHANG, Baocheng, Wuxi, 214028 (CN)
(74) Representative: Nordmeyer, Philipp Werner

(57) **Abstract**

The present invention relates to a cooling system of charge air for a reciprocating internal combustion engine, the internal combustion engine uses ammonia as fuel and is equipped with an air compressor for supplying compressed charge air to a combustion chamber of the internal combustion engine. The cooling system of charge air comprises a liquid ammonia gasification unit arranged in a charge air flow path between the air compressor and the combustion chamber and configured to gasify the liquid ammonia by absorbing heat of the charge air, so as to supply gasified ammonia to the combustion chamber. The present invention makes use of the heat of charge air to gasify liquid ammonia, thus avoiding or omitting the setting of an additional heat resource required for ammonia gasification, thereby saving energy and improving the thermal efficiency of the entire engine system. The present invention also relates to an internal combustion engine comprising such a cooling system of charge air.

## Description

### Technical Field

The present disclosure relates to a reciprocating internal combustion engine using ammonia as fuel, more particularly, to a cooling technology of charge air of the internal combustion engine.

### Background Art

Ammonia is a combustible nitrogen hydrogen compound, and has the advantages of artificial synthesis, easy liquefaction, easy storage and transportation, and no carbon. For example, it is known that the gas turbine engine operates with ammonia as fuel. However, for a reciprocating internal combustion engine, use of ammonia as fuel is a novel technology of zero carbon emission. The existing reciprocating internal combustion engine taking ammonia as fuel uses liquid ammonia as the fuel source, but the liquid ammonia needs to be gasified into ammonia gas so that it can be supplied to the combustion chamber or cylinder of the internal combustion engine for combustion. The process of gasifying ammonia from liquid requires a lot of heat, so a special or additional heat source is usually provided for the gasification.

It is known in the art that, the reciprocating internal combustion engine is equipped with an air compressor, e.g. a turbocharger compressor, to increase the amount of air entering the combustion chamber of the internal combustion engine by compressing the air. Since the temperature of the air increases significantly when compressed, a charge air cooler (CAC) is required to reduce the temperature of the compressed air (hereinafter referred to as "charge air") and make it suitable for combustion in the combustion chamber of the internal combustion engine. In the internal combustion engine equipped with an air compressor, the cooling of charge air is often divided into several stages, especially the primary or high temperature cooling stage for cooling the high-temperature charge air coming from the compressor, and the secondary or low temperature cooling stage for re-cooling the primarily cooled charge air.

### Summary of Invention

In one aspect, the present disclosure provides a cooling system of charge air for a reciprocating internal combustion engine, the internal combustion engine uses ammonia as fuel and is equipped with an air compressor for supplying compressed/pressurized charge air to a combustion chamber of the internal combustion engine, wherein the cooling system of charge air comprises a liquid ammonia gasification unit arranged in a charge air flow path between the air compressor and the combustion chamber and configured to gasify the liquid ammonia by absorbing heat of the charge air, so as to supply gasified ammonia to the combustion chamber.

The present invention makes use of the heat of pressurized charge air to gasify liquid ammonia, thus avoiding or omitting any additional heat resource typically required for ammonia gasification, thereby saving energy and improving the thermal efficiency of the entire engine system.

In another aspect, the present disclosure provides an internal combustion engine comprising a cooling system of charge air as mentioned above, particularly a reciprocating internal combustion engine using ammonia as fuel.

### Brief Description of the Drawings

Fig. 1 is a schematic diagram of a cooling system of charge air according to the first embodiment of the present invention.
Fig. 2 is a schematic diagram of a cooling system of charge air according to the second embodiment of the present invention.

### Detailed Description of the Embodiments

Embodiments of the present invention will be described below with reference to the accompanying drawings.

The present invention relates to the reciprocating internal combustion engine, particularly to the internal combustion engine equipped with a compressor, e.g. a turbocharged compressor, and more particularly to the internal combustion engine that operates with ammonia as fuel. In particular, the present invention relates to a technique for cooling the charge air compressed by an air compressor and subsequently supplied to a combustion chamber of an internal combustion engine. The concept of the present invention lies in combining the cooling of charge air with the heat absorption in the gasification of liquid ammonia, so as to achieve the effects of saving energy, improving efficiency and simplifying the structure cost by making full use of the heat and/or cold energy generated by the operation of the internal combustion engine.

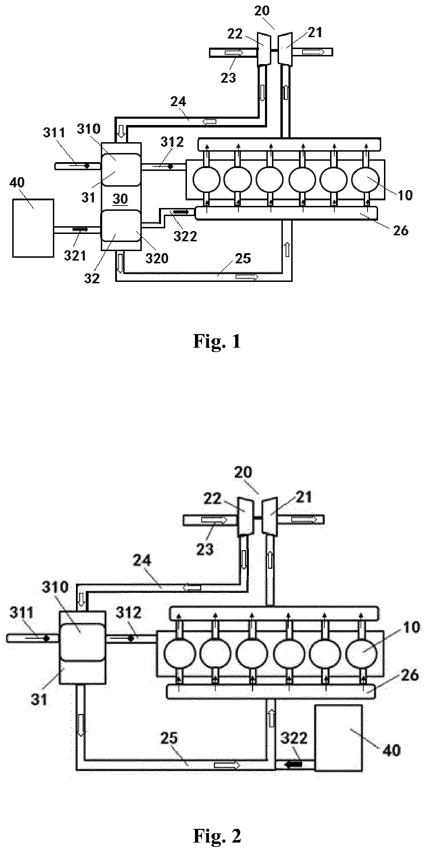

Referring to Fig. 1, the ammonia-fueled internal combustion engine of the present invention may include a combustion chamber with a reciprocating piston or, more specifically, a cylinder 10 (six combustion chambers are schematically shown in the figure), and may be equipped with a turbocharger 20 independent of the combustion chamber or cylinder 10. The turbocharger 20 may include a turbine 21 and an air compressor 22. The turbine 21 may be driven to rotate by the hot exhaust gas from the combustion chamber or cylinder 10, and may in turn drive the air compressor 22 connected with it. The air compressor 22 may receive fresh air via a port 23, e.g. a port communicated with an air filter, and then compresses it. The compressed charge air may be supplied to the combustion chamber or cylinder 10 through pipes 24 and 25, as shown by the hollow arrows in the figure.

In the charge air flow path between the air compressor 22 and the combustion chamber or cylinder 10, specifically in the pipes 24 and 25, for example between the pipes 24 and 25 as shown in Fig. 1, a cooling system 30 of charge air for reducing the temperature of the charge air may be disposed. The cooling system 30 of charge air may include a plurality of cooling stages, in particular a primary or high-temperature cooling stage 31 and a secondary or low-temperature cooling stage 32.

The primary or high-temperature cooling stage 31 may include a heat exchanger 30, for example, of fin type or coil type, which may receive, via a pipe 311, a coolant at a relatively high temperature, e.g. high-temperature water. After flowing through the heat exchanger 310, the high-temperature coolant can flow further to the engine cylinder block via the pipe 312, thus continuing to be used as an engine coolant, as shown by the diamond arrow in the figure.

The secondary or low-temperature cooling stage 32 may be arranged downstream of the primary or high-temperature cooling stage 31 in the flow direction of the charge air, and configured to further reduce the temperature of the charge air having passed through the primary or high-temperature cooling stage 31.

According to the present invention, at least one cooling stage of the cooling system 30 of charge air, especially the secondary or low-temperature cooling stage 32, may be formed by a liquid ammonia gasification unit. The liquid ammonia gasification unit can be configured to gasify the liquid ammonia by absorbing the heat of the charge air, and allow the gasified ammonia to be supplied as fuel to the combustion chamber or cylinder 10 of the internal combustion engine.

As shown in Fig. 1, according to the first embodiment of the present invention, the liquid ammonia gasification unit can include a heat exchanger 320, which has, for example, a fin type or coil type structure, and can be connected to a liquid ammonia source, e.g. a liquid ammonia tank 40, via a pipe 321 to receive liquid ammonia as a coolant. At the other side, the heat exchanger 320 can be led to an input end of the combustion chamber or cylinder 10 through the pipe 322, especially into a premixing device 26, so that the gaseous ammonia generated by gasification of the liquid ammonia can be mixed with the charge air that has been cooled to an appropriate temperature in a predetermined proportion, as shown by the solid arrow in the figure. The mixture of ammonia and charge air thus formed can be sent to the combustion chamber or cylinder 10 for combustion.

As can be seen from Fig. 1, in the first embodiment, preferably, the heat exchanger 320 of the liquid ammonia gasification unit 32 may be disposed adjacent to the heat exchanger 310 of the primary or high-temperature cooling stage 31; for example, the two heat exchangers 310 and 320 may be arranged in a common frame or housing.

Now referring to Fig. 2, which shows the second embodiment of the cooling system of charge air of the present invention. The elements in the second embodiment that are the same or similar to those in the first embodiment are indicated by the same reference signs, and will not be described in detail.

As shown in Fig. 2, the difference between the second embodiment and the first embodiment is the configuration of the liquid ammonia gasification unit. Specifically, in the second embodiment, the liquid ammonia gasification unit does not include a heat exchanger, but includes an injection device (not shown in the figure) located at a distance from the primary or high-temperature cooling stage 31. The injection device is connected with a liquid ammonia tank 40 through the pipe 322 on the one hand, and flows into a flow pipe of the charge gas, especially a pipe 25, on the other hand.

For example, the injection device may include a nozzle for direct injection or spray of liquid ammonia into the pipe 25. The nozzle may extend into the pipe 25 in a predetermined pattern or angle, and may be controlled by a controller to inject a jet or droplet of liquid ammonia into the pipe 25 at a controlled flow rate.

Of course, the injection device may also include other forms of injection structures, such as a pipe or a pressurized delivery channel extending into the pipe 25.

In particular, the injection device (especially its output port) can be arranged adjacent to the premixing device 26, so that the liquid ammonia can easily enter the premixing device 26 together with the charge air after it is gasified into a gaseous state by the heat of the charge air.

As can be seen from Fig. 2, in the second embodiment, the premixing device 26 may only include a single input port connected with the pipe 25, which contains the mixture of ammonia and charge air. In contrast, in the first embodiment, the premixing device 26 may include different input ports that are respectively connected with the pipe 322 containing ammonia and the pipe 25 containing charge air.

That is to say, the second embodiment is characterized in that the liquid ammonia is directly mixed with the hot charge air, so that it can be mixed with the charge air cooled to an appropriate temperature while being gasified to form a mixed gas, and sent to the combustion chamber of the internal combustion engine for combustion.

### Industrial Applicability

The cooling system of charge air of the present invention can advantageously gasify the liquid ammonia as a fuel source during cooling the hot charge air, and supply the gasified ammonia and the charge air cooled to an appropriate temperature to the combustion chamber of the internal combustion engine for combustion. In the present invention, the heat absorption in the gasification of liquid ammonia is used for the cooling of charge air, that is to say, the heat exchange between the liquid ammonia and the charge air is carried out in the internal combustion engine system, thereby omitting any separate devices and/or processes for heating the liquid ammonia and cooling the charge air, and thus simplifying the structure and saving the energy.

Specifically, during the operation of the internal combustion engine equipped with a cooling system of charge air of the present invention, a control unit (e.g. ECU) can be used to control the flow of liquid ammonia from the liquid ammonia tank 40 to the heat exchanger 320 or injected into the pipe 25 according to the air fuel ratio, thus ensuring that the ammonia supplied to the combustion chamber or cylinder 10 and especially to the premixing device 26 is fully gasified and presents a predetermined ratio with the charge air.

To this end, a flow controller can be provided at the liquid ammonia tank 40 to control the flow of liquid ammonia output from the liquid ammonia tank 40. It can also be envisaged to set flow regulators, such as switch control valves, in pipes 321 and 322 to control or regulate the flow of gasified ammonia according to the pressure and temperature of the charge gas in the pipeline.

The present invention make use of the hot charge air to gasify liquid ammonia, which saves additional heat resources required for gasifying the liquid ammonia in know solutions, and reduces the energy and structure costs. Moreover, thanks to the present invention, the cooling stage, such as the secondary or low-temperature cooling stage, in known solutions can be replaced with the heat absorption in the gasification of liquid ammonia, thereby reducing the amount of coolant to be used.

This specification is for illustrative purposes only, and should not be expected to limit the scope of the present invention in any manner. Therefore, those skilled in the art should understand that various modifications can be made to the disclosed embodiments without departing from the full and reasonable scope and spirit of the present invention. Other aspects, features and advantages will become apparent from the drawings and the appended claims.

## Claims

1. A cooling system of charge air for a reciprocating internal combustion engine, the internal combustion engine using ammonia as fuel and being equipped with an air compressor for supplying compressed charge air to a combustion chamber of the internal combustion engine, wherein the cooling system of charge air comprises a liquid ammonia gasification unit arranged in a charge air flow path between the air compressor and the combustion chamber, and configured to gasify the liquid ammonia by absorbing heat of the charge air, so as to supply gasified ammonia to the combustion chamber.

2. The cooling system of charge air according to claim 1, **characterized in that** the liquid ammonia gasification unit comprises a first heat exchanger with liquid ammonia as coolant.

3. The cooling system of charge air according to claim 1, **characterized in that** the liquid ammonia gasification unit comprises an injection device for directly injecting liquid ammonia into the charge air.

4. The cooling system of charge air according to one of the preceding claims, **characterized by** further comprising a cooling unit arranged in the charge air flow path between the air compressor and the combustion chamber.

5. The cooling system of charge air according to claim 4, **characterized in that** the liquid ammonia gasification unit is located at downstream of the cooling unit in a flow direction of the charge air.

6. The cooling system of charge air according to claim 5, **characterized in that** the cooling unit comprises a second heat exchanger arranged in the charge air flow path.

7. The cooling system of charge air according to claim 6, **characterized in that** the coolant flows through the second heat exchanger and further flows to an engine cylinder block to cool the engine.

8. The cooling system of charge air according to claim 7, **characterized in that** the coolant of the second heat exchanger is water.

9. The cooling system of charge air according to one of claims 1 to 3, **characterized in that** the internal combustion engine comprises a premixing device, wherein the gasified ammonia and the charge air are mixed in the premixing device before entering the combustion chamber.

10. An internal combustion engine provided with a cooling system of charge air according to one of the preceding claims.
